# EUROPÄISCHE PATENTSCHRIFT

(11) **EP 0 965 779 B1**
(45) Veröffentlichungstag und Bekanntmachung des Hinweises auf die Patenterteilung: **25.02.2004**
(21) Anmeldenummer: 99111483.6
(22) Anmeldetag: 14.06.1999
(51) Int. Cl.: F16J 3/04, F16J 15/32, F16J 15/56

(54) **Dichtungsring**
Sealing ring
Anneau d'étanchéité

(30) Priorität: 20.06.1998 DE 29811098 U
(43) Veröffentlichungstag der Anmeldung: 22.12.1999
(73) Patentinhaber: Festo AG & Co, 73734 Esslingen (DE)
(72) Erfinder: Thorwart, Gerhard, 70794 Filderstadt (DE); Weiblen, Frank, 72555 Metzingen (DE); Buczek, Richard, 73061 Ebersbach (DE); Kutscher, Erwin, 73061 Ebersbach-Bünzwangen (DE)
(74) Vertreter: Abel, Martin, Dipl.-Ing.

(56) Entgegenhaltungen:
- EP-A- 0 195 115
- EP-A- 0 589 684
- US-A- 4 150 835
- US-A- 5 553 872

## Beschreibung

Die Erfindung betrifft einen Dichtungsring zum abdichtenden Zusammenwirken mit einem ihn durchsetzenden, axial relativ bewegbaren stangenförmigen Bauteil, mit einer ringförmigen Dichtlippe, die im Bereich ihrer radialen Innenseite einen oder mehrere in Umfangsrichtung verteilte Radialvorsprünge zum dichtenden Zusammenwirken mit einer entsprechenden Anzahl von Längsnuten am Außenumfang des stangenförmigen Bauteils aufweist, und mit einer über einen ringförmigen Übergangsabschnitt mit der Dichtlippe verbundenen, die Dichtlippe mit Radialabstand umschließenden ringförmigen Außenlippe.

Ein Dichtungsring dieser Art geht aus der EP 0 346 716 B1 hervor. Er wird dort zur Abdichtung zwischen der axial hin und her bewegbaren Kolbenstange und dem Gehäuse eines fluidbetätigten Arbeitszylinders eingesetzt. Die Kolbenstange verfügt am Außenumfang über eine Mehrzahl in Umfangsrichtung verteilt angeordnete Längsnuten, in die sich am Gehäuse abstützende Lagermittel eingreifen, um die Kolbenstange bei ihrer Linearbewegung zu führen und gleichzeitig an einem Verdrehen bezüglich dem Gehäuse zu hindern. Die ringförmige Dichtlippe des Dichtungsringes liegt über den gesamten Umfang mit Dichtkontakt an der Außenfläche der Kolbenstange an, wobei die Radialvorsprünge mit Dichtwirkung in die Längsnuten eingreifen.

Es hat sich gezeigt, daß die bei der bekannten Anordnung mit dem Dichtungsring erzielbare Dichtwirkung noch nicht optimal ist. Die bisher kaum zu vermeidende Leckage hat in Verbindung mit einem Pneumatikzylinder einen hohen Luftverbrauch zur Folge, was die Betriebskosten erhöht. Außerdem ist die austretende Druckluft mit einem bei manchen Einsatzfällen nicht tolerierbaren Zischgeräusch verbunden.

Es ist die Aufgabe der vorliegenden Erfindung, Maßnahmen zu treffen, die eine Verbesserung der Dichtwirkung zwischen dem Dichtungsring und einem von ihm umschlossenen stangenförmigen Bauteil herbeiführen.

Zur Lösung dieser Aufgabe wird in Verbindung mit den eingangs genannten Merkmalen vorgeschlagen, im Bereich eines jeweiligen Radialvorsprunges eine sich zwischen der Dichtlippe und der Außenlippe erstreckende Verbindungssteganordnung vorzusehen.

Die je nach Ausgestaltung über einen oder mehrere Verbindungsstege verfügende Verbindungssteganordnung bewirkt eine radiale Abstützung der Dichtlippe im kritischen Bereich des zugeordneten Radialvorsprunges. Somit wird zusätzlich ein radial gerichteter Druck auf die Dichtlippe im Bereich ihrer Radialvorsprünge ausgeübt, so daß ein sicherer Dichtkontakt sowohl mit den Begrenzungsflächen der Längsnuten als auch mit dem Übergangsbereich zwischen den Längsnuten und den sich anschließenden Außenflächenabschnitten des stangenförmigen Bauteils gewährleistet ist. Es wird ferner der zusätzliche Effekt eines verbesserten Toleranzausgleiches erzielt, indem die Dichtlippe ungeachtet eventueller toleranzbedingter Maßabweichungen vollumfänglich in sicherem Dichtkontakt mit dem abzudichtenden stangenförmigen Bauteil steht.

Vorteilhafte Weiterbildungen der Erfindung gehen aus den Unteransprüchen hervor.

Die einem jeweiligen Radialvorsprung zugeordnete Verbindungssteganordnung kann mehrere einzelne Verbindungsstege aufweisen. Als besonders zweckmäßig hat sich eine Anordnung erwiesen, bei der zwei in Umfangsrichtung der Dichtlippe zueinander beabstandete Verbindungsstege vorgesehen sind, die beidseits des jeweils zugeordneten Radialvorsprunges sitzen und dabei zweckmäßigerweise im Übergangsbereich zwischen dem Radialvorsprung und dem sich in Umfangsrichtung anschließenden Dichtlippenabschnitt.

Vorzugsweise kommen die vorhandenen Verbindungssteganordnungen vollständig innerhalb des sich zwischen der Dichtlippe und der Außenlippe erstreckenden Zwischenraumes zu liegen, wobei sie im Bereich der offenen Seite dieses Zwischenraumes von den freien Enden der Dichtlippe und der Außenlippe axial überragt sein können.

Die Außenlippe ist zweckmäßigerweise ebenfalls als Dichtlippe ausgeführt, die dazu vorgesehen ist, eine statische Dichtwirkung gegenüber der den Dichtungsring in der Gebrauchsstellung haltenden Halterung auszuüben.

Damit sich insgesamt eine sehr stabile Struktur ergibt, ist von Vorteil, wenn die Verbindungssteganordnungen bzw. deren Verbindungsstege nicht nur an der Dichtlippe und an der Außenlippe, sondern auch am Übergangsabschnitt zwischen diesen beiden Lippen festgelegt ist. Dabei bietet sich eine einstükkige Verbindung an, so daß der Dichtungsring als integrales Kunststoffbauteil hergestellt werden kann.

Nachfolgend wird die Erfindung anhand der beiliegenden Zeichnung näher erläutert. In dieser zeigen:
- Figur 1: eine bevorzugte Bauform des erfindungsgemäßen Dichtungsringes in perspektivischer Einzeldarstellung, wobei strichpunktiert ein den Dichtungsring in seiner Gebrauchsstellung koaxial durchsetzendes stangenförmiges Bauteil angedeutet ist,
- Figur 2: eine Vorderansicht auf den in eine Halterung eingebauten Dichtungsring der Figur 1 gemäß Schnittlinie II-II aus Figur 4, wobei das abzudichtende stangenförmige Bauteil wiederum strichpunktiert angedeutet ist,
- Figur 3: eine axiale Rückansicht des Dichtungsringes der Figur 1 in Einzeldarstellung,
- Figur 4: einen Querschnitt mit sich radial und axial erstrekkender Schnittebene gemäß Schnittlinie IV-IV aus Figur 2 durch den Dichtungsring und die zugeordnete Halterung,
- Figur 5: eine weitere Schnittdarstellung des Dichtungsringes gemäß Schnittlinie V-V aus Figur 2,
- Figur 6: einen Teilschnitt durch den Dichtungsring gemäß Schnittlinie VI-VI aus Figur 5, und
- Figur 7: eine weitere Ausführungsform des Dichtungsringes in Einzeldarstellung in axialer Vorderansicht.

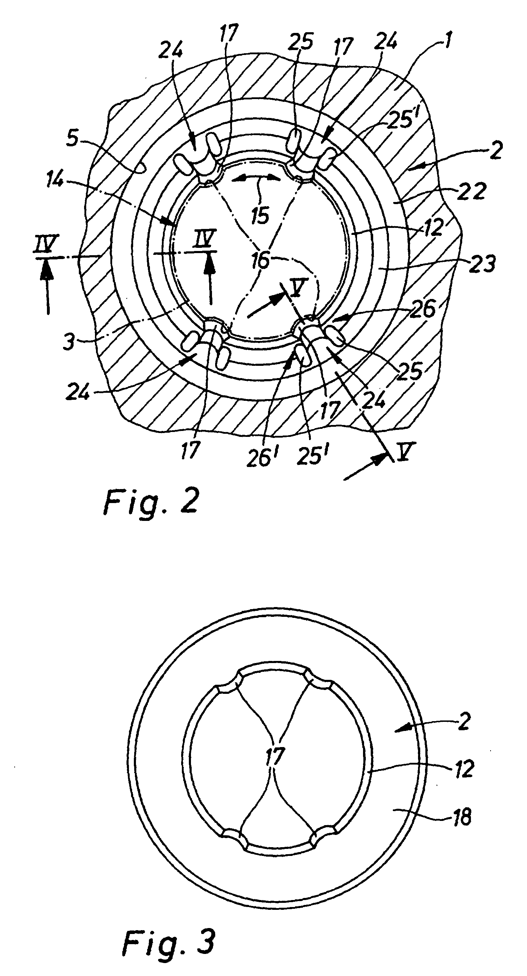

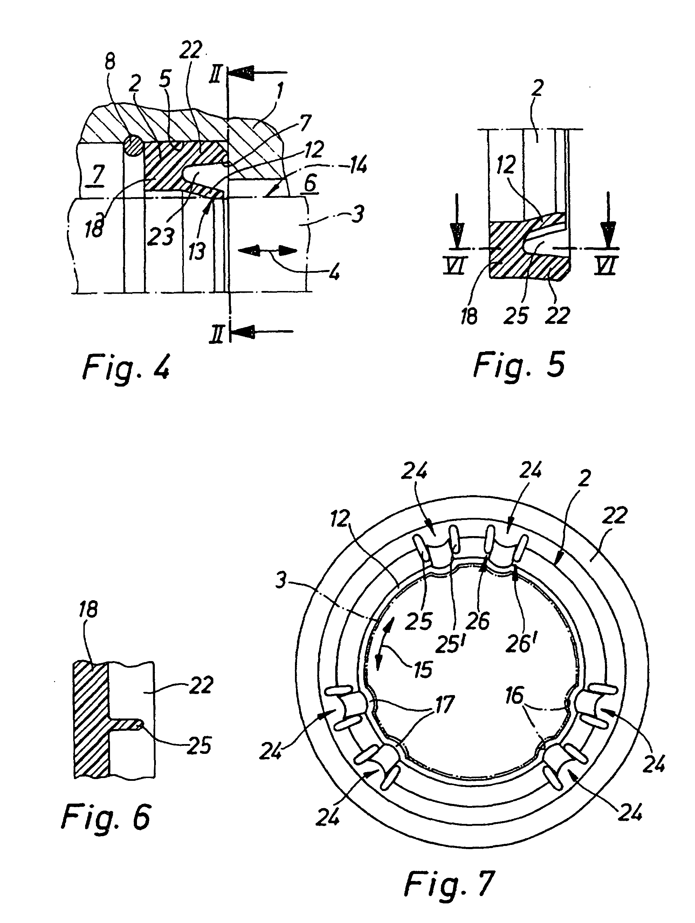

Die Figuren 2 und 4 zeigen ausschnittsweise und im Schnitt eine Halterung 1, an der der erfindungsgemäße Dichtungsring 2 lösbar festgelegt ist. Letzterer befindet sich hierbei in einer üblichen Gebrauchsstellung, in der er von einem strichpunktiert angedeuteten stangenförmigen Bauteil 3 koaxial durchsetzt wird. Dieses stangenförmige Bauteil 3 kann relativ zur Halterung 1 und dem daran festgelegten Dichtungsring 2 eine durch Doppelpfeil angedeutete Axialbewegung 4 ausführen.

Bei dem dargestellten bevorzugten Ausführungsbeispiel ist die Halterung 1 vom Gehäuse und dabei insbesondere von einer stirnseitigen Gehäusewand eines durch Fluidkraft und vorzugsweise pneumatisch betätigten Arbeitszylinders gebildet. Das stangenförmige Bauteil 3 ist in diesem Falle die Kolbenstange des Arbeitszylinders, die im Innern des Gehäuses mit einem nicht näher dargestellten Kolben verbunden ist und außerhalb des Gehäuses einen Abgriff einer Linearbewegung ermöglicht. Der grundsätzliche Aufbau eines solchen Arbeitszylinders kann demjenigen entsprechen, wie er in der EP 0 346 716 B1 beschrieben ist, auf deren Inhalt hiermit ausdrücklich verwiesen wird.

Die zur Fixierung des Dichtungsringes 2 dienende Halterung 1 verfügt über eine Durchbrechung 5, in die der Dichtungsring 2 koaxial eingesetzt und axial unbeweglich fixiert ist. Der Dichtungsring 2 kann hierzu mit seiner dem abzudichtenden Innenraum 6 zugewandten Vorderseite an einer Ringschulter 7 der Durchbrechung 5 anliegen und kann an seiner dem Außenraum 7 zugewandten Rückseite durch ein an der Halterung 1 lösbar festgelegtes Sicherungselement 8 fixiert sein. Das stangenförmige Bauteil 3 durchsetzt sowohl den Dichtungsring 2 als auch die Durchbrechung 5.

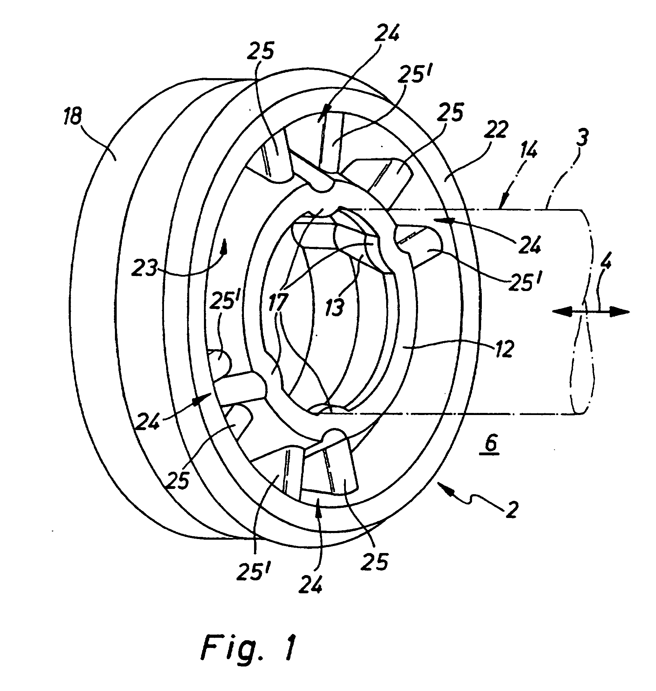

Die Figur 1 zeigt eine Vorderansicht des Dichtungsringes 2 von der Seite des abzudichtenden Innenraumes 6 her. Die Halterung 1 ist hier zur Vereinfachung nicht dargestellt.

Der Dichtungsring 2 verfügt über eine ringförmige Dichtlippe 12, die das stangenförmige Bauteil 3 in der Gebrauchsstellung koaxial umschließt, wobei sie mit einer ihrem zur Vorderseite weisenden freien Ende zugeordneten ringförmigen Dichtpartie 13 mit Dichtkontakt am Außenumfang 14 des stangenförmigen Bauteils 3 anliegt. Letzteres hat beim Ausführungsbeispiel eine im wesentlichen kreisförmige Querschnittsform, wobei aber am Außenumfang 14 mehrere in Umfangsrichtung gemäß Doppelpfeil 15 mit Abstand verteilt zueinander angeordnete Längsnuten 16 in die ansonsten zylindrische Außenfläche des stangenförmigen Bauteils 3 eingelassen sind.

Die Längsnuten 16 dienen zur Führung und zur Verdrehsicherung des stangenförmigen Bauteils 3 mit Bezug zur Halterung 1. Hierzu sind an der Halterung 1 nicht näher dargestellte, beispielsweise von Kugeln gebildete Lagermittel vorgesehen, die insbesondere axial außerhalb des Dichtungsringes 2 in die Längsnuten 16 eingreifen und in diesen bei der Linearbewegung des stangenförmigen Bauteils 3 abrollen. Näheres zur möglichen Bauform und Anordnung solcher Lagermittel kann wiederum aus der EP 0 346 716 B1 entnommen werden.

Die Anzahl und Verteilung von Längsnuten 16 hängt vom Einsatzzweck und insbesondere von der der Baugröße der Gesamtanordnung ab. So zeigt die Figur 7 eine Ausführungsform für größere Stangendurchmesser, wobei drei um 120° in Umfangsrichtung 15 zueinander versetzte Zonen vorhanden sind, in denen sich jeweils zwei in Umfangsrichtung 15 unmittelbar benachbarte Längsnuten 16 befinden. Die eher für Stangendurchmesser kleinerer Abmessungen vorgesehene Ausgestaltung der Figuren 1 bis 6 enthält nur zwei sich diametral gegenüberliegende Zonen mit Längsvertiefungen 16, wobei allerdings der in Umfangsrichtung 15 gemessene Winkelabstand zwischen den Längsnuten 16 einer jeweiligen Zone größer ist als bei der anderen abgebildeten Bauform.

Die radiale Innenkontur der Dichtlippe 12 entspricht zumindest im Bereich ihrer Dichtpartie 13 der Gestaltung der Außenkontur des zugeordneten stangenförmigen Bauteils 3. Daraus resultiert eine beim Ausführungsbeispiel vorhandene Mehrfachanordnung von in Umfangsrichtung 15 verteilten Radialvorsprüngen 17 im Bereich der radialen Innenseite der Dichtlippe 12, welche Radialvorsprünge 17 an ihrer dem stangenförmigen Bauteil 3 zugewandten Seite einen Verlauf haben, der der Querschnittskontur der Längsnuten 16 entspricht. Jeder Längsnut 16 liegt ein solcher Radialvorsprung 17 radial außen gegenüber, der in die betreffende Längsnut 16 eingreift und dichtend an deren konkaver Begrenzungsfläche anliegt. Die sich in Umfangsrichtung 15 zwischen den Radialvorsprüngen 17 erstreckenden Umfangsabschnitte der Dichtlippe 12 stehen in vergleichbarer Weise in Dichtkontakt mit den sich in Umfangsrichtung 15 zwischen den Längsnuten 16 erstreckenden konvexen Außenflächenabschnitten des stangenförmigen Bauteils 3.

An ihrer dem zum Innenraum 6 gewandten freien Ende entgegengesetzten Rückseite ist die Dichtlippe 12 einstückig an einen ringförmigen Übergangsabschnitt 18 angeformt, der desweiteren eine ebenfalls einstückig angeformte ringförmige Außenlippe 22 trägt, die in die gleiche Axialrichtung absteht wie die Dichtlippe 12. Die Außenlippe 22 umschließt einen größeren Durchmesser als die Dichtlippe 12, so daß letztere von der Außenlippe 22 koaxial mit einem Radialabstand umgeben wird, der einen ringförmigen nutähnlichen Zwischenraum 23 definiert, der zur Vorderseite des Dichtungsringes 2 hin offen ist und sich zu dieser Vorderseite hin erweitert. Die Erweiterung resultiert insbesondere aus dem sich konisch verjüngenden Verlauf der Dichtlippe 12, deren Durchmesser sich ausgehend vom Übergangsabschnitt 18 zur Dichtpartie 13 hin verringert.

Um zu gewährleisten, daß die Dichtlippe 12 im Bereich ihrer Radialvorsprünge 17 gut dichtend an der Außenfläche des stangenförmigen Bauteils 3 anliegt, ist im Bereich eines jeweiligen Radialvorsprunges 17 eine sich zwischen der Dichtlippe 12 und der Außenlippe 22 radial erstreckende Verbindungssteganordnung 24 vorgesehen. Sie stützt sich zwischen der Außenlippe 22 und der Dichtlippe 12 ab, wobei sie die Dichtpartie 13 im Bereich der Radialvorsprünge 17 verstärkt gegen das stangenförmige Bauteil 3 andrückt. Daraus resultiert eine optimierte Abdichtwirkung im Bereich der Längsnuten 16 und vor allem auch im Übergangsbereich zwischen diesen Längsnuten 16 und den sich in Umfangsrichtung 15 anschließenden Oberflächenabschnitten des stangenförmigen Bauteils 3.

Jede Verbindungssteganordnung 24 umfaßt beim Ausführungsbeispiel zwei Verbindungsstege 25, 25', die nach Art von Unterteilungswänden in den Zwischenraum 23 eingezogen sind und die daher den Zwischenraum 23 in verschiedene Umfangsabschnitte unterteilen. Abgesehen von ihrer axial vom Übergangsabschnitt 18 wegweisenden Vorderseite sind die Verbindungsstege 25, 25' jeweils vorzugsweise randseitig durchgehend mit sowohl dem Übergangsabschnitt 18 als auch der Dichtlippe 12 und der Außenlippe 22 fest verbunden. Eine einstückige Verbindung, die sich im Rahmen einer integralen Spritzgießfertigung des Dichtungsringes 2 erzielen läßt, wird hierbei vorgezogen. Auf diese Weise sind die Verbindungssteganordnungen 24 einstückiger Bestandteil des Dichtungsringes 2.

Die beiden Verbindungsstege 25, 25' einer jeweiligen Verbindungssteganordnung 24 sind zweckmäßigerweise so plaziert, daß sie in Umfangsrichtung 15 zueinander beabstandet sind und in dieser Umfangsrichtung 15 beidseits des jeweils zugeordneten Radialvorsprunges 17 zu liegen kommen. Hier bietet sich insbesondere jeweils eine Position an, die den beiden Übergangsbereichen 26, 26' zwischen einem jeweiligen Radialvorsprung 17 und den sich in Umfangsrichtung 15 beidseits daran anschließenden Dichtlippenabschnitten zugeordnet ist. Die Dichtlippe 12 wird somit in diesen Übergangsbereichen 26, 26' besonders abgestützt und gegen die Übergangsbereiche zwischen der zugeordneten Längsnut 16 und dem sich anschließenden Oberflächenabschnitt des stangenförmigen Bauteils 3 gedrückt.

Als vorteilhaft wird angesehen, wenn die Verbindungssteganordnungen 24 vollständig innerhalb des Zwischenraumes 23 aufgenommen sind. Beim Ausführungsbeispiel werden die Verbindungsstege 25, 25' an der Vorderseite des Dichtungsringes 2 von den freien Enden der Dichtlippe 12 und der Außenlippe 22 überragt.

Der gesamte Dichtungsring 2 besteht zweckmäßigerweise aus Material mit gummielastischen Eigenschaften, das eine gute Dichtwirkung entfaltet. Auf diese Weise kann auch die Außenlippe 22 eine Dichtfunktion übernehmen, wie dies beim Ausführungsbeispiel der Fall ist. Hier ist die Außenlippe 22 ebenfalls als Dichtlippe ausgeführt, die zum abdichtenden Zusammenwirken mit der Halterung 1 dient. Sie ist wie die Dichtlippe 12 radial elastisch nachgiebig, so daß sie im in die Durchbrechung 5 eingesetzten Zustand mit einer radial nach innen gerichteten Kraft beaufschlagt wird, so daß sie unter Vorspannung an der zylindrischen Innenfläche der Durchbrechung 5 anliegt.

In vergleichbarer Weise liegt auch die Dichtlippe 12 mit ihrer Dichtpartie 13 unter Vorspannung am Außenumfang des stangenförmigen Bauteils 3 an. Die Anordnung ist so getroffen, daß der von der Dichtpartie 13 begrenzte Querschnitt vor dem Montieren des stangenförmigen Bauteils 3 geringer ist als derjenige des stangenförmigen Bauteils 3 selbst. Wird letzteres dann in den Dichtungsring 2 eingesteckt, erfährt die Dichtlippe 2 eine elastische radiale Aufweitung, so daß sie unter Vorspannung an der Außenoberfläche des stangenförmigen Bauteils 3 anliegt. Die Verbindungssteganordnung 24 verstärkt dabei den Anpreßdruck im Bereich der Radialvorsprünge 17.

Es ist noch nachzutragen, daß die Dichtlippe 12 im Bereich der Radialvorsprünge 17 an ihrer radialen Außenseite vertieft ausgeführt sein kann, so daß sich für die Dichtlippe 12 trotz Vorhandensein der Radialvorsprünge über den gesamten Umfang hinweg eine annähernd konstante Wandstärke ergibt, was das Verformungsvermögen vorteilhaft beeinflußt.

## Patentansprüche

1. Dichtungsring zum abdichtenden Zusammenwirken mit einem ihn durchsetzenden, axial relativ bewegbaren stangenförmigen Bauteil (3), mit einer ringförmigen Dichtlippe (12), die im Bereich ihrer radialen Innenseite einen oder mehrere in Umfangsrichtung (15) verteilte Radialvorsprünge (17) zum dichtenden Zusammenwirken mit einer entsprechenden Anzahl von Längsnuten (16) am Außenumfang (14) des stangenförmigen Bauteils (3) aufweist, und mit einer über einen ringförmigen Übergangsabschnitt (18) mit der Dichtlippe (12) verbundenen, die Dichtlippe (12) mit Radialabstand umschließenden ringförmigen Außenlippe (22), **dadurch gekennzeichnet, daß** im Bereich eines jeweiligen Radialvorsprunges (17) eine sich zwischen der Dichtlippe (12) und der Außenlippe (22) erstreckende Verbindungssteganordnung (24) vorgesehen ist.

2. Dichtungsring nach Anspruch 1, **dadurch gekennzeichnet, daß** jede Verbindungssteganordnung (24) mehrere Verbindungsstege (25, 25') aufweist.

3. Dichtungsring nach Anspruch 2, **dadurch gekennzeichnet, daß** jede Verbindungssteganordnung (24) zwei in Umfangsrichtung der Dichtlippe (12) zueinander beabstandete und beidseits des zugeordneten Radialvorsprunges (17) vorgesehene Verbindungsstege (25, 25') aufweist.

4. Dichtungsring nach Anspruch 3, **dadurch gekennzeichnet, daß** die Verbindungsstege (25, 25') dem Übergangsbereich zwischen einem Radialvorsprung (17) und dem sich in Umfangsrichtung (15) daran anschließenden Dichtlippenabschnitt zugeordnet sind.

5. Dichtungsring nach einem der Ansprüche 1 bis 4, **dadurch gekennzeichnet, daß** die mindestens eine Verbindungssteganordnung (24) vollständig innerhalb des sich zwischen der Dichtlippe (12) und der Außenlippe (22) erstreckenden Zwischenraumes (23) aufgenommen ist.

6. Dichtungsring nach Anspruch 5, **dadurch gekennzeichnet, daß** die mindestens eine Verbindungssteganordnung (24) axial von den freien Enden der Dichtlippe (12) und der Außenlippe (22) überragt wird.

7. Dichtungsring nach einem der Ansprüche 1 bis 6, **dadurch gekennzeichnet, daß** die Außenlippe (22) ebenfalls als Dichtlippe ausgeführt ist, die zum abdichtenden Zusammenwirken mit einer den Dichtungsring (2) in Gebrauchsstellung fixierenden Halterung (1) vorgesehen ist.

8. Dichtungsring nach einem der Ansprüche 1 bis 7, **dadurch gekennzeichnet, daß** die jeweilige Verbindungssteganordnung (24) auch am Übergangsabschnitt (18) festgelegt ist.

9. Dichtungsring nach Anspruch 8, **dadurch gekennzeichnet, daß** die vorhandenen Verbindungsstege (25, 25') abgesehen von ihrer axial vom Übergangsabschnitt (18) wegweisenden Vorderseite randseitig durchgehend mit dem Übergangsabschnitt, der Dichtlippe (12) und der Außenlippe (22) verbunden sind.

10. Dichtungsring nach einem der Ansprüche 1 bis 9, **dadurch gekennzeichnet, daß** eine jeweilige Verbindungssteganordnung (24) einstückiger Bestandteil des Dichtungsringes (2) ist.

11. Dichtungsring nach einem der Ansprüche 1 bis 10, **dadurch gekennzeichnet, daß** das stangenförmige Bauteil (3) von der Kolbenstange eines fluidbetätigten Arbeitszylinders gebildet ist.

## Claims

1. Seal ring for sealing cooperation with a rod-shaped component (3) passing through it and capable of axial relative movement, with an annular sealing lip (12) having in the area of its radially inner side one or more radial projections (17) distributed in the circumferential direction (15) for sealing cooperation with a corresponding number of longitudinal grooves (16) on the outer periphery (14) of the rod-shaped component (3), and with an annular outer lip (22) joined by an annular transition section (18) to the sealing lip (12) and surrounding the sealing lip (12) with radial clearance, **characterised in that** a connecting web assembly (24) extending between the sealing lip (12) and the outer lip (22) is provided in the area of each radial projection (17).

2. Seal ring according to claim 1, **characterised in that** each connecting web assembly (24) has several connecting webs (25, 25').

3. Seal ring according to claim 2, **characterised in that** each connecting web assembly (24) has two connecting webs (25, 25'), spaced apart in the circumferential direction of the sealing lip (12) and provided on either side of the assigned radial projection (17).

4. Seal ring according to claim 3, **characterised in that** the connecting webs (25, 25') are assigned to the transition zone between a radial projection (17) and the adjacent sealing lip section in the circumferential direction (15).

5. Seal ring according to any of claims 1 to 4, **characterised in that** the connecting web assembly or assemblies (24) is or are accommodated completely within the intermediate space (23) extending between the sealing lip (12) and the outer lip (22).

6. Seal ring according to claim 5, **characterised in that** the free ends of the sealing lip (12) and the outer lip (22) extend axially beyond the connecting web assembly or assemblies (24).

7. Seal ring according to any of claims 1 to 6, **characterised in that** the outer lip (22) is likewise in the form of a sealing lip which is provided for sealing cooperation with a holder (1) fixing the seal ring (2) in the position of use.

8. Seal ring according to any of claims 1 to 7, **characterised in that** each connecting web assembly (24) is also fixed to the transition section (18).

9. Seal ring according to claim 8, **characterised in that** the connecting webs (25, 25') provided, apart from their front sides which face axially away from the transition section (18), are continuously joined at the edge to the transition section, the sealing lip (12) and the outer lip (22).

10. Seal ring according to any of claims 1 to 9, **characterised in that** each connecting web assembly (24) is an integral part of the seal ring (2).

11. Seal ring according to any of claims 1 to 10, **characterised in that** the rod-shaped component (3) is formed by the piston rod of a fluid-actuated operating cylinder.

## Revendications

1. Bague d'étanchéité pour la coopération étanche avec un composant (3) en forme de barre, la traversant et déplaçable axialement par rapport à celle-ci, avec une lèvre d'étanchéité (12) de forme annulaire qui présente, dans la zone de sa face intérieure radiale, une ou plusieurs saillies radiales (17) réparties dans la direction périphérique (15), pour la coopération étanche avec un nombre correspondant de rainures longitudinales (16) sur le pourtour extérieur (14) du composant (3) en forme de barre, et avec une lèvre extérieure (22) de forme annulaire reliée à la lèvre d'étanchéité (12) par un tronçon de transition (18) de forme annulaire, et enfermant la lèvre d'étanchéité (12) à distance radiale, **caractérisée en ce que** dans la zone de chaque saillie radiale (17) est prévu un ensemble de pattes de liaison (24) s'étendant entre la lèvre d'étanchéité (12) et la lèvre extérieure (22).

2. Bague d'étanchéité selon la revendication 1, **caractérisée en ce que** chaque ensemble de pattes de liaison (24) comporte plusieurs pattes de liaison (25, 25').

3. Bague d'étanchéité selon la revendication 2, **caractérisée en ce que** chaque ensemble de pattes de liaison (24) comporte deux pattes de liaison (25, 25') espacées l'une de l'autre dans la direction périphérique de la lèvre d'étanchéité (12) et prévues de part et d'autre de la saillie radiale (17) associée.

4. Bague d'étanchéité selon la revendication 3, **caractérisée en ce que** les pattes de liaison (25, 25') sont associées à la zone de transition entre une saillie radiale (17) et le tronçon de lèvre d'étanchéité s'y raccordant dans la direction périphérique (15).

5. Bague d'étanchéité selon l'une des revendications 1 à 4, **caractérisée en ce que** le ou les ensembles de pattes de liaison (24) sont logés entièrement à l'intérieur de l'interstice (23) s'étendant entre la lèvre d'étanchéité (12) et la lèvre extérieure (22).

6. Bague d'étanchéité selon la revendication 5, **caractérisée en ce que** le ou les ensembles de pattes de liaison (24) dépassent axialement des extrémités libres de la lèvre d'étanchéité (12) et de la lèvre extérieure (22).

7. Bague d'étanchéité selon l'une des revendications 1 à 6, **caractérisée en ce que** la lèvre extérieure (22) est réalisée également en tant que lèvre d'étanchéité qui est prévue pour la coopération étanche avec une fixation (1) fixant la bague d'étanchéité (2) en position d'utilisation.

8. Bague d'étanchéité selon l'une des revendications 1 à 7, **caractérisée en ce que** chaque ensemble de pattes de liaison (24) est fixé sur son tronçon de transition (18).

9. Bague d'étanchéité selon la revendication 8, **caractérisée en ce que** les pattes de liaison (25, 25') prévues sont reliées, à l'exception de leur côté avant dirigé à l'opposé axialement du tronçon de transition (18), sur les bords et d'un bout à l'autre, au tronçon de transition, à la lèvre d'étanchéité (12) et à la lèvre extérieure (22).

10. Bague d'étanchéité selon l'une des revendications 1 à 9, **caractérisée en ce que** chaque ensemble de pattes de liaison (24) fait partie intégrante d'un seul tenant de la bague d'étanchéité (2).

11. Bague d'étanchéité selon l'une des revendications 1 à 10, **caractérisée en ce que** le composant (3) en forme de barre est formé par la tige de piston d'un vérin actionné par un fluide.
